# EUROPEAN PATENT APPLICATION

(11) **EP 3 032 850 A1**
(43) Date of publication of application: **15.06.2016**
(21) Application number: 14834666.1
(22) Date of filing: 11.08.2014
(51) Int. Cl.: H04W 4/08, H04W 48/16, H04W 92/18

(54) **SERVICE DISCOVERY TECHNIQUE IN WIRELESS COMMUNICATION NETWORK FOR FORMING P2P GROUP**

(30) Priority: 09.08.2013 KR 20130095041
(71) Applicant: Samsung Electronics Co., Ltd., Gyeonggi-do 16677 (KR)
(72) Inventor: LEE, Jong-Hyo, Seongnam-si Gyeonggi-do 463-708 (KR); GOPALAN, Karthik Srinivasa, Bangalore 560037 (IN); PATIL, Mayuresh Madhukar, Bangalore 560037 (IN)
(74) Representative: HGF Limited
(86) International application number: PCT/KR2014/007442
(87) International publication number: WO 2015/020502

(57) **Abstract**

A service discovery method of a device in a wireless communication network for forming a peer to peer (P2P) group comprises the steps of: receiving, from a group owner of the P2P group, a message including at least one piece of service identification information on services provided by group clients belonging to the P2P group; checking whether a desired service exists by using the at least one piece of service identification information; and performing a service discovery for the desired service if the desired service exists.

## Description

### Technical Field

The present disclosure relates to a technology for wireless communication between devices and, more particularly, to a discovery technique for a service that is provided by a client device belonging to a group.

### Background Art

Wi-Fi Direct is a technology for supporting a connection between Wi-Fi devices, which enables devices equipped with Wi-Fi to communicate directly without passing through a Wi-Fi access point (AP). Wi-Fi Direct may be referred to as "Wi-Fi peer-to-peer technical specification", "Wi-Fi direct", or "Wi-Fi P2P (peer-to-peer)".

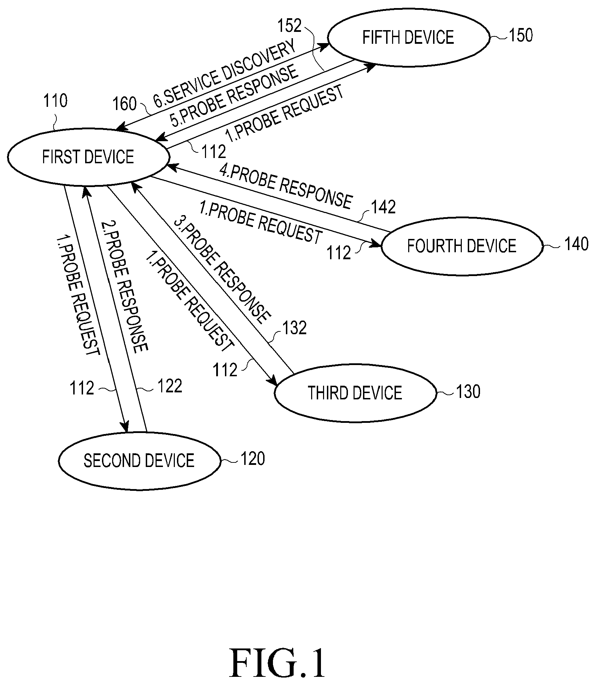

FIG. 1 illustrates a method of discovering, by a device requiring a service, another device that can provide the service, using Wi-Fi Direct.

It is assumed that there are devices equipped with Wi-Fi, including a first device 110, a second device 120, a third device 130, a fourth device 140, and a fifth device 150, and among them, the first device 110 requires ("require" may also be expressed as "search for" or "desire") a service and the fifth device 150 can provide the service.

The first device 110 requiring to receive a service may detect which services can be provided by other devices, using a service hash in a probe mechanism that is one of existing Wi-Fi mechanisms.

The probe mechanism is merely a procedure for checking whether devices can be connected to each other, but the probe mechanism used in Wi-Fi Direct can also check whether a particular service is provided. Specifically, when a device requiring a service transmits a probe request including information on the required service to a plurality of devices, a device that has received the probe request transmits a probe response including information on a service that the device can provide.

Here, the probe request may be transmitted in a broadcast mode, and the probe response may be transmitted in a unicast mode. However, when the amount of information transmitted through the probe request is too large, the utilization of a frequency, which is a common resource, is lowered because the probe request is transmitted in a broadcast mode. Accordingly, the device desiring to receive a service hashes the service name through a hash algorithm such as SHA (secure hash algorithm)-256, and includes only a part of the service name in the probe request. However, since the probe response is transmitted in a unicast mode, the device that has received the probe request may transmit the probe response including the full name of the service that the device can provide.

In FIG. 1, the first device 110 requiring to receive a service may hash the name of the required service and use a part of the hashed service name as a service hash. The first device 110 adds the service hash in a probe request 112, and broadcasts the probe request to other devices. Each device 120, 130, 140, 150 that has received the probe request adds the full name of a service, which the device can provide, in a probe response, and transmits the probe response in a unicast mode (122, 132, 142, 152).

Upon receiving the probe response, the first device 110 determines that the fifth device 150 can provide the service required by the first device 110, and performs a service discovery (SD) mechanism only for the fifth device 150 (as indicated by "160").

The SD mechanism is a mechanism defined to inquire of a counterpart device about detailed information on which service the counterpart device supports, how the counterpart device supports the corresponding service, and the like using a unicast mode. For example, the SD mechanism supports the exchange of information on the name, function, requirements, and the like of a service.

Accordingly, in FIG. 1, the first device 110 may exchange information on the name, function, requirements, and the like of the service with the fifth device 150 through the SD mechanism.

The Wi-Fi Direct as described in FIG. 1 corresponds to the case where a one-to-one connection is made between two devices. However, if several devices have already formed a peer to peer (P2P) group through Wi-Fi Direct, then a device not belonging to the P2P group can discover only the owner of the group (group owner), and cannot discover client devices belonging to the group (group clients or P2P clients). This is because the group clients that have already formed paring according to the Wi-Fi Direct standard do not respond to a probe request. Accordingly, even when the group clients can provide services, the device not belonging to the group cannot easily (directly) detect that the group clients can provide services.

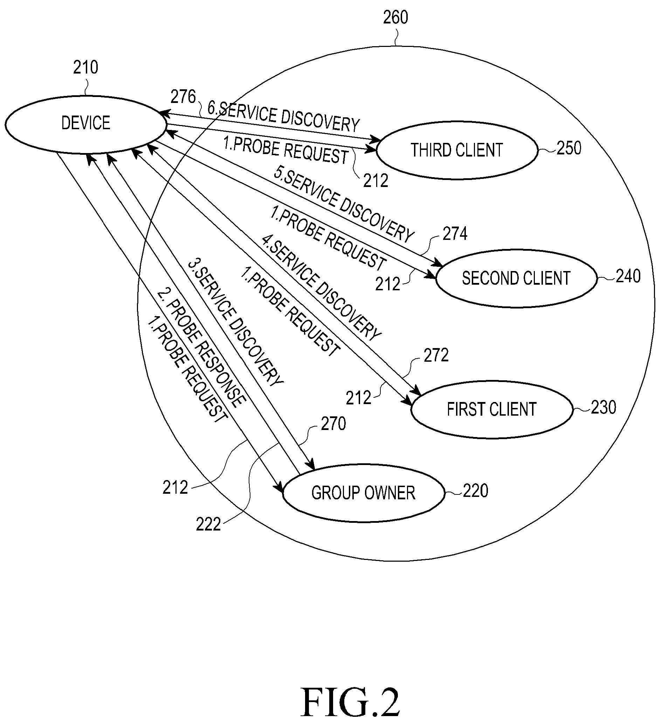

FIG. 2 illustrates a service discovery method for a service that can be provided by a client belonging to a group in which communication is performed using Wi-Fi Direct.

As an example, FIG. 2 shows that a plurality of devices 220, 230, 240, 250 may form a P2P group 260 using Wi-Fi Direct, a specific device 220 may be the group owner of the P2P group, and the other devices 230, 240, 250 may be group clients.

A first device 210 searching for a service transmits a probe request in a broadcast mode in order to discover a device that can provide the service. However, the first client 230, the second client 240, and the third client 250 already belonging to the group do not respond to the probe request even when they receive the probe request (as indicated by "212"). Only the group owner 220 responds to the probe request (as indicated by "222"). The device 210 searching for a service may know of the existence of the group clients and connection information for the clients (e.g., the addresses and operation frequencies of the group clients) through information included in a probe response 222 from the group owner 220, but cannot detect which group client provides which service.

Since the device 210 searching for a service has become aware of the addresses and operation frequencies of the group clients, the device 210 may attempt to perform a service discovery for the group owner 220, the first client 230, the second client 240, and the third client 250 in sequence.

Specifically, the device 210 searching for a service performs a service discovery that inquires of the group owner 220 about whether the group owner 220 can provide the service (as indicated by "270"). If the group owner 220 cannot provide the service, then the device 210 searching for the service performs a service discovery for the first client 230 (as indicated by "272"). If the first client 230 cannot also provide the service, then the device 210 searching for the service performs a service discovery for the second client 240 (as indicated by "274"). Likewise, if the second client 240 also cannot provide the service, then the device 210 searching for the service performs a service discovery for the third client 250 (as indicated by "276"). In this way, the device 210 searching for the service discovers the group client that can provide the service.

Since the service discovery is performed in a unicast mode, a device searching for a service should repeatedly inquire about the service (that is, perform a service discovery) until the service is discovered. For example, if there are five group clients belonging to one group, then a device searching for a service should perform a service discovery five times in the worst case. Further, when the device is to search for the service in an area where there are many groups, the situation may get worse.

From the standpoint of a portable terminal that is operated by a battery, the problem caused by the fact that the service discovery is performed in a unicast mode is very inefficient and wasteful. Further, in a place where there are many groups and wireless terminals, such as an office or conference hall, the efficiency of Wi-Fi that uses a common frequency may be significantly reduced because a large amount of traffic is generated therein.

### Detailed Description of the Invention

### Technical Problem

The present disclosure provides a service discovery method for a device in a wireless communication network in which a peer to peer (P2P) group is formed.

The present disclosure provides a method for supporting a service discovery by a group owner in a wireless communication network in which a peer to peer (P2P) group is formed.

The present disclosure provides a device for supporting a service discovery in a wireless communication network in which a peer to peer (P2P) group is formed.

The present disclosure provides a group owner for supporting a service discovery in a wireless communication network in which a peer to peer (P2P) group is formed.

### Technical Solution

According to an embodiment of the present disclosure, a service discovery method for a device in a wireless communication network in which a peer to peer (P2P) group is formed comprises the steps of: receiving, from a group owner of the P2P group, a message including at least one piece of service identification information on services that are provided by group clients belonging to the P2P group; checking whether a desired service exists using the at least one piece of service identification information; and when the desired service exists, performing a service discovery for the desired service.

According to another embodiment of the present disclosure, a method for supporting a service discovery by a group owner in a wireless communication network in which a peer to peer (P2P) group is formed comprises the steps of: acquiring information on at least one service that is provided by group clients belonging to the P2P group; generating service identification information on the at least one service provided by the group clients belonging to the P2P group; and transmitting a message including the generated service identification information to a neighboring device.

According to an embodiment of the present disclosure, a device for supporting a service discovery in a wireless communication network in which a peer to peer (P2P) group is formed comprises: a transceiver unit for receiving, from a group owner of the P2P group, a message including at least one piece of service identification information on services that are provided by group clients belonging to the P2P group, and when a desired service exists, performing a service discovery for the desired service; and a control unit for checking whether the desired service exists using the at least one piece of service identification information.

According to another embodiment of the present disclosure, a group owner for supporting a service discovery in a wireless communication network in which a peer to peer (P2P) group is formed comprises: a transceiver unit for acquiring information on at least one service that is provided by group clients belonging to the P2P group, and transmitting, to a neighboring device, a message including service identification information on the at least one service provided by the group clients belonging to the P2P group; and a control unit for generating the service identification information.

### Brief Description of the Drawings

FIG. 1 is a view illustrating a method of discovering, by a device requiring a service, another device that can provide the service, using Wi-Fi Direct;
FIG. 2 is a view illustrating a service discovery method for a service, which can be provided by a group client, using conventional Wi-Fi Direct;
FIG. 3 is a signal flow diagram for explaining an operational concept according to an embodiment of the present disclosure;
FIG. 4 is a flowchart illustrating an operation procedure of a device searching for a service according to an embodiment of the present disclosure;
FIG. 5 is a flowchart illustrating an operation procedure of a group owner according to an embodiment of the present disclosure; and
FIG. 6 is a block diagram illustrating a configuration of a device according to the present disclosure.

### Mode for Carrying Out the Invention

Hereinafter, exemplary embodiments of the present disclosure for solving the above described technical problems will be presented in the following detailed description. Further, in the following description of the present disclosure, a detailed description of known configurations or functions incorporated herein will be omitted when it is determined that the detailed description may make the subject matter of the present disclosure unnecessarily unclear. In addition, the terms as described below are defined in consideration of the functions in the present disclosure, and the definitions may vary according to the intention of a user or operator, practices, or the like. Therefore, the terms should be defined on the basis of the contents throughout the specification.

In the present disclosure, the number of clients in a P2P group is at least one, and particularly in the following embodiments, a group client will be referred to without strictly distinguishing between the case where there is a single client and the case where there are a plurality of clients.

Further, a device as mentioned in the present disclosure is a device supporting Wi-Fi Direct, and may include typical electronic devices such as a portable terminal, a printer, a monitor, a television (TV), and a game console.

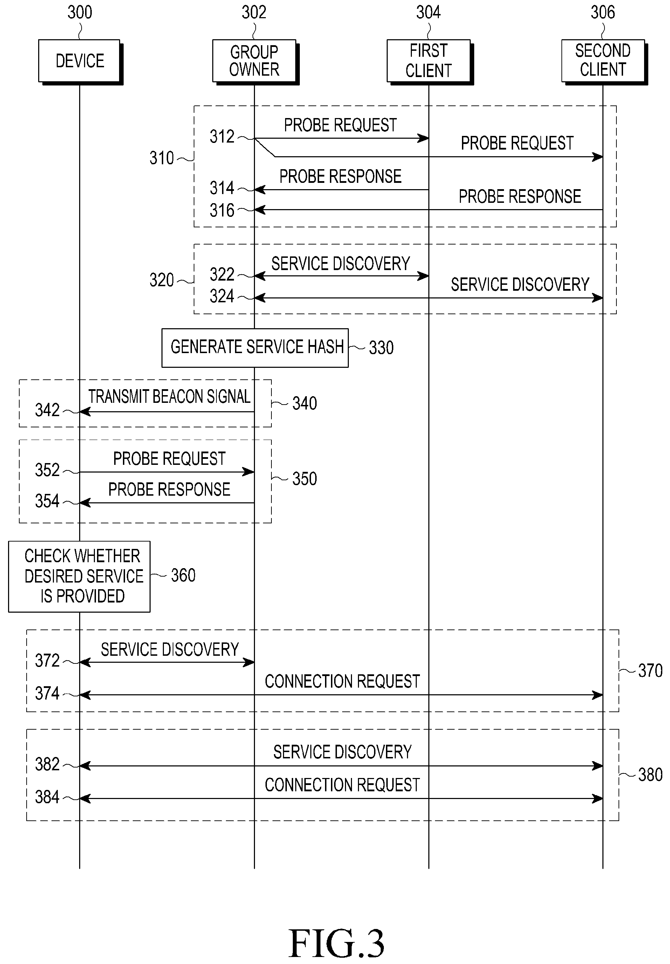

FIG. 3 illustrates a signal flow diagram for explaining an operational concept according to an embodiment of the present disclosure.

First, it should be noted that all steps as described below in FIG. 3 do not have to be included in implementing the invention. That is, the invention may be implemented by selectively operating at least one of the steps shown in FIG. 3.

In this embodiment, it is assumed that any device 300 searches for ("search for" may also be expressed as "desire" or the like) a service, and a device capable of providing the service for which the device 300 searches is a second client 306.

The group owner 302 of the P2P group may perform a probe mechanism 312, 314, 316 or a service discovery mechanism 322, 324 in order to store (or update) information on a service that the group client 304, 306 belonging to the group owner's group can provide. The probe mechanism may include probe request transmission 312 in a broadcast mode and probe response reception 314, 316 in a unicast mode. The discovery mechanism 322, 324 may include service discovery query transmission and service discovery response reception. The operation of storing (or updating) the service information by the group owner 302 may be performed when each group client 304, 306 is initiated into the group, performed periodically, or performed whenever needed. Alternatively, the operation of storing (or updating) the service information may be performed by the service discovery mechanism 320 in a unicast mode when the operation should be individually performed for the group client, and may be performed by the probe mechanism 310 in a broadcast mode when the operation should be performed for all the group clients.

In step 330, the group owner 302 generates a service hash, which is identification information on the service, using the stored service information for the group client 304, 306. The service hash may be generated by applying, for example, the SHA-256 algorithm to the service name included in the service information and using first 6 bytes of the service name to which the SHA-256 algorithm has been applied. The group owner 302 may store mapping information between the service hash and the address of the group client that provides the service identified by the service hash. According to implementations, the mapping information may be mapping information between the full name of the service (not the service hash) and the address of the group client that provides the service.

When there are several services in the group, as many service hashes as the number of the services may be generated. When many service hashes are generated, the group owner 302 may integrate all the service hashes into one service hash value using a technique for reducing the amount of data to be transmitted, such as a bloom filter, in order to increase transmission efficiency. The service hash value obtained using the bloom filter has the same size as that of one service hash (e.g., 6 bytes).

The device 300 searching for the service may acquire information on the service that the group client can provide, using a beacon signal transmitted by the group owner 302 (step 342), or may directly request the group owner 302 for the information on the service that the group client can provide, using the probe mechanism (step 350).

Specifically, in step 340, the group owner 302 may transmit a beacon signal in which the generated service hash is added in order to inform the device of the existence of the service. The group owner 302 may add a pair of the service hash and information on the address (e.g., MAC (media access control) address) of the group client providing the service in the "Advertise Service Info" field of the beacon signal, or may transfer the beacon signal including only the service hash in the "Advertise Service Info" field. Here, the "Advertise Service Info" field may include a sub attribute (or subfield) for the service hash and a sub attribute (or subfield) for the client information (address). In step 350, if the device 300 searching for the service transmits, to the group owner 302, a probe request inquiring about information on the service that the group client can provide (step 352), then the group owner 302 may respond by adding the information on the service, which the client can provide, in a probe response using one of the following three methods (step 354).

As the first method, the group owner 302 responds by adding a pair of the name of the service and the address of the group client that can provide the service in the probe element called "Advertise Service Info" of the probe response. Here, the probe element called "Advertise Service Info" may include a sub attribute (or subfield) for the service hash and a sub attribute (or subfield) for the client information (address).

As the second method, the group owner 302 responds by adding a pair of the name of the service and the address of the group client in the probe element called "P2P Group Info" of the probe response. Here, the probe element called "Advertise Service Info" may include a sub attribute (or subfield) for the service hash and a sub attribute (or subfield) for the client information (address).

Finally, as the third method, the group owner 302 transmits the probe response that includes only the address of the group client (without mapping information between the address and information on the service provided by the group client).

In step 360, the device 300 searching for the service checks whether the service information received in step 340 or step 350 corresponds to the service that the device is searching for.

When the device 300 can know information on the address of the client that provides the service, the device 300 may perform a service discovery (step 380) directly with the client that provides the service. However, when the device cannot know information on the address of the client that provides the service, for example, because the group owner 302 transfers only the client address without the service information, the device 300 performs a service discovery (step 370) with the group owner 302. Specifically, the device 300 may perform step 370 when not only the device 300 cannot know information on the address of the service providing client, but also the group owner 302 can provide a service discovery in place of the group client.

In step 370, the device 300 searching for the service may request the group owner 302 for a service discovery so as to acquire detailed information on the service that the client belonging to the group can provide (step 372). Accordingly, the device 300 may transmit a connection request to the group client 306 that can provide the desired service (step 374).

In step 380, the device 300 may perform a service discovery directly with the service providing client (step 382). Further, if the second client 306 can provide the service as a result of the service discovery, then the device 300 may transmit a connection request to the service providing client 306 (step 384).

In order for the device searching for the service to directly request the service providing group client for a service discovery, the group owner 302 should support the first or second method among the three methods of responding by the probe response. That is, only when the first or second method is supported, the device searching for the service can know the address of the group client capable of providing the service, and can transmit a connection request directly to the group client. However, when the group owner 302 supports only the third method of responding by the probe response, the device searching for the service should sequentially perform a service discovery with each group client until the desired service is discovered.

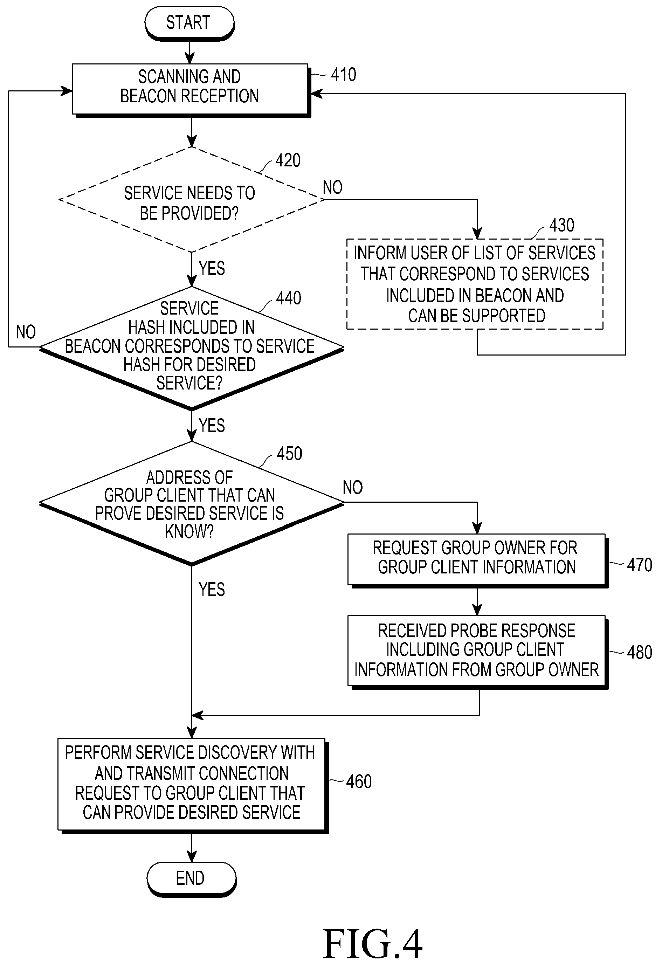

FIG. 4 is a flowchart illustrating an operation procedure of a device searching for ("searching for" may also be expressed as "desiring" or the like) a service according to an embodiment of the present disclosure.

First, it should be noted that all steps as described below in FIG. 4 do not have to be performed in implementing the invention. That is, the invention may be implemented by selectively performing at least one of the steps shown in FIG. 4.

In order to acquire information on adjacent Wi-Fi devices, the device searching for a service may sequentially scan all operational frequency bands and receive a beacon signal that is operated by a Wi-Fi group owner (step 410).

Alternatively, the device may perform an operation of determining whether a service needs to be provided (step 420). Specifically, the device may determine that a specific service needs to be provided, through a user input or driving of an application. When the device determines that a service needs to be provided, the device may generate a service hash for identifying the service. If a service needs to be provided as a result of the determination in step 420, then the device proceeds to step 440. Otherwise, the device proceeds to step 430. In step 430, the device may inform the user of a list of services that the device can also provide among services that can be provided by adjacent devices. Step 430 may be selectively supported according to the type of device, the need of the user, and the like. Next, the device may perform step 410.

In step 440, the device checks whether a service hash included in the beacon signal corresponds to the service hash that the device is searching for. If the corresponding service hash exists, then the device proceeds to step 450. Otherwise, the device proceeds to step 410, and repeats the operation of sequentially scanning all operational frequency bands and receiving a beacon signal operated by the Wi-Fi group owner.

In step 450, the device determines whether information on the address of a group client that provides the service that the device searches for is included in the beacon signal. If the beacon signal includes information on the address of the group client and thus the device can know the address, then the device proceeds to step 460. Otherwise, the device proceeds to step 470.

In step 470, the device transmits, to the group owner, a probe request inquiring about information on the group client that provides the desired service. In step 480, the device receives, from the group owner, a probe response including the information on the group client that provides the service.

In step 460, the device may perform a service discovery mechanism with the group client that can provide the desired service, and may transmit a connection request to the group client. Since the device can know the information (address) on the group client that provides the service, through the beacon signal or probe response received from the group owner, the device can perform the service discovery using the client information.

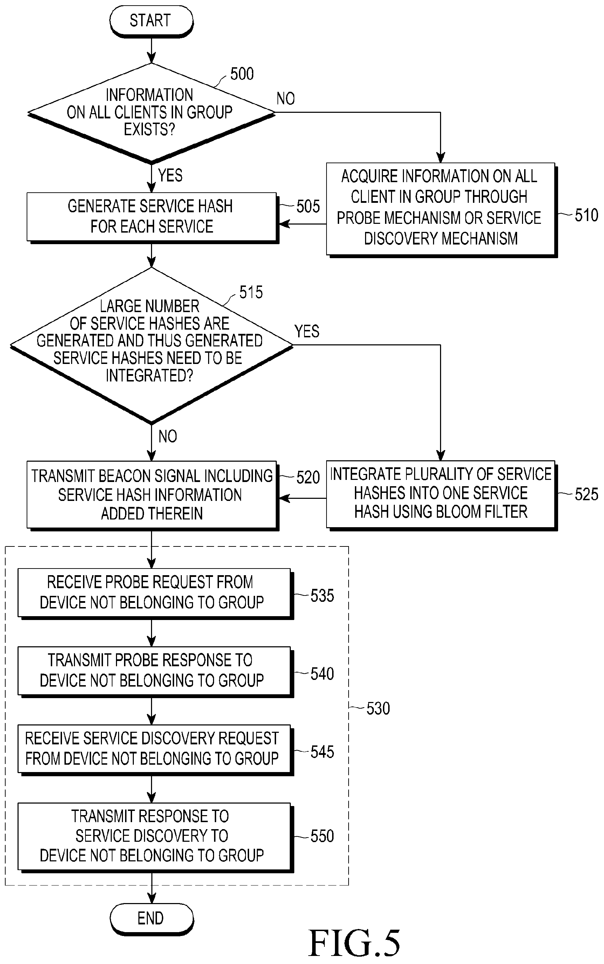

FIG. 5 is a flowchart illustrating an operation procedure of a group owner according to an embodiment of the present disclosure.

In step 500, the group owner checks whether information on all clients in the group exists, and proceeds to step 505 when the information exists. Otherwise, the group owner proceeds to step 510.

In step 510, the group owner may use the probe mechanism or service discovery mechanism to acquire the information on all group clients in the group. The group owner can acquire only the name of a provided service when using the probe mechanism, but can acquire up to detailed information on the service when using the service discovery mechanism. The service discovery mechanism is generally performed in a unicast mode, but if necessary, the group owner may transmit a service discovery query in a broadcast mode and receive a response from each group client in a unicast mode.

In step 505, the group owner generates each service hash for the names of all services that the clients in the group can provide.

In step 515, the group owner determines whether the number of the generated service hashes is such that they need to be integrated. The group owner proceeds to step 525 if the service hashes need to be integrated, and proceeds to step 520 if the service hashes do not need to be integrated.

In step 525, when a large number of service hashes are generated, the group owner may integrate (or compress) the service hashes into one service hash using a bloom filter.

In step 520, the device transmits, to devices not belonging to the group, a beacon signal in which the integrated service hash or non-integrated service hashes is/are added.

Step 530 may be performed when there is a device that makes a request for providing the service included in the beacon signal among the devices not belonging to the group, which have received the beacon signal. In step 535, the group owner may receive a probe request from a device not belonging to the group.

In step 540, the group owner may transmit, to the device from which the probe request has been received, a probe response using one of the three methods described in step 354 of FIG. 3.

In step 545, the group owner may receive a service discovery query (or service discovery request) from the device.

In step 550, the group owner may transmit a response to the service discovery query to the device. However, when the group owner cannot transmit service discovery information for the group clients in the group that are under the control of the group owner, the group owner may transmit, to the device, a message indicating that the group owner cannot transmit a service discovery response.

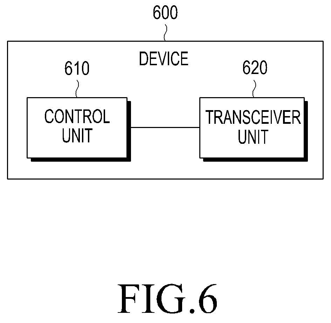

FIG. 6 illustrates a configuration of a device according to the present disclosure.

The device 600 according to the present disclosure may include a control unit 610 for performing the probe mechanism and/or the service discovery mechanism with another device and a transceiver unit 620 for transmitting/receiving a signal under the control of the control unit 610.

The controller 610 may be understood to perform all operations of a device (including the group owner and the clients) as described in the present disclosure. For example, the control unit 610 may be understood to perform the operations of the device as described in FIG. 4 (as an example, the operation of determining whether a service hash included in a beacon signal corresponds to the service that is being searched for), and the operations of the group owner as described in FIG. 5 (as an example, the operation of generating service hashes for services that can be provided by all clients in the group).

Although FIG. 6 illustrates the transceiver unit 620 and the control unit 610 as separate elements, the transceiver unit 620 and the control unit 610 may be implemented as one element.

The above described operations may be implemented by installing a memory device storing corresponding program codes in a device of a communication system or any element of a terminal device. That is, the control unit of the device or terminal device may perform the above described operations by reading and executing the program codes stored in the memory device through a processor or central processing unit (CPU).

The various elements, modules, and the like of the device or terminal device as described in the specification may be operated using a hardware circuit, for example, a complementary metal oxide semiconductor-based logical circuit, firmware, software, and/or a combination of hardware, firmware, and/or software inserted into a machine-readable medium. As an example, various electrical structures and methods may be carried out using electrical circuits such as transistors, logic gates, and application specific integrated circuits (ASICs).

While the present invention has been shown and described in detail in connection with particular embodiments thereof, it will be apparent that various modifications and changes may be made without departing from the scope of the present disclosure. Therefore, the scope of the present disclosure should not be defined as being limited to the described embodiments, but should be defined by the appended claims and equivalents thereto.

## Claims

1. A service discovery method for a device in a wireless communication network in which a peer to peer (P2P) group is formed, the service discovery method comprising the steps of:
receiving, from a group owner of the P2P group, a message including at least one piece of service identification information on services that are provided by group clients belonging to the P2P group;
checking whether a desired service exists using the at least one piece of service identification information; and
when the desired service exists, performing a service discovery for the desired service.

2. The service discovery method of claim 1, wherein the step of performing the service discovery for the desired service comprises the step of transmitting a service discovery query for the desired service to the group owner, and receiving a response to the service discovery query from the group owner.

3. The service discovery method of claim 1, wherein the message received from the group owner comprises one of a beacon signal and a probe response message.

4. The service discovery method of claim 1, wherein the message received from the group owner further comprises address information on a group client, which is mapped to the service identification information.

5. The service discovery method of claim 4, wherein the step of performing the service discovery for the desired service comprises the step of transmitting a service discovery query for the desired service to the group client indicated by the mapped address information, and receiving a response to the service discovery query from the group client.

6. The service discovery method of claim 1, wherein the device comprises a device that does not belong to the P2P group.

7. The service discovery method of claim 1, wherein the device comprises a device that performs communication using Wi-Fi Direct.

8. A method for supporting a service discovery by a group owner in a wireless communication network in which a peer to peer (P2P) group is formed, the method comprising the steps of:
acquiring information on at least one service that is provided by group clients belonging to the P2P group;
generating service identification information on the at least one service provided by the group clients belonging to the P2P group; and
transmitting a message including the generated service identification information to a neighboring device.

9. The method of claim 8, wherein the information on the at least one service provided by the group clients belonging to the P2P group is included in one of a probe response message to a probe request and a response message to a discovery query.

10. The method of claim 8, wherein the service identification information on the service comprises a service hash that is generated using the name of the service.

11. The method of claim 10, wherein the service hash is generated by integrating a plurality of service hashes into one service hash.

12. The method of claim 8, wherein the message including the generated service identification information comprises one of a beacon signal and a probe response message.

13. The method of claim 12, wherein the service identification information included in the probe response message is included in one of a probe element called "Advertise Service Info" and a probe element called "P2P Group Info".

14. The method of claim 8, wherein the step of generating the service identification information on the at least one service further comprises the step of generating a client address mapped to the service identification information, wherein the message including the generated service identification information further includes the client address mapped to the service identification information.

15. A device for supporting a service discovery in a wireless communication network in which a peer to peer (P2P) group is formed, the device comprising:
a transceiver unit for receiving, from a group owner of the P2P group, a message including at least one piece of service identification information on services that are provided by group clients belonging to the P2P group, and when a desired service exists, performing a service discovery for the desired service; and
a control unit for checking whether the desired service exists using the at least one piece of service identification information.

16. The device of claim 15, wherein the device is configured to implement the service discovery method of any one of claims 2 to 7.

17. A group owner for supporting a service discovery in a wireless communication network in which a peer to peer (P2P) group is formed, the group owner comprising:
a transceiver unit for acquiring information on at least one service that is provided by group clients belonging to the P2P group, and transmitting, to a neighboring device, a message including service identification information on the at least one service provided by the group clients belonging to the P2P group; and
a control unit for generating the service identification information.

18. The group owner of claim 17, wherein the group owner is configured to implement the method of any one of claims 9 to 14.
